# EUROPEAN PATENT APPLICATION

(11) **EP 1 519 555 A2**
(43) Date of publication of application: **30.03.2005**
(21) Application number: 04021829.9
(22) Date of filing: 14.09.2004
(51) Int. Cl.: H04M 7/00, H04M 3/38

(54) **Terminal usage authorisation in a packet-network telephony system**

(30) Priority: 29.09.2003 JP 2003337752
(71) Applicant: Kabushiki Kaisha Toshiba, Tokyo 105-8001 (JP)
(72) Inventor: Tahara, Yasufumi IPD, Minato-ku Tokyo 105-8001 (JP)
(74) Representative: Wenning, Ekkehard

(57) **Abstract**

A system includes a memory (21) which stores first identification information necessary to use the telephone terminal (T11 to T1i, T21, T31 to T3j) and second identification information correlated with the first identification information to regulate usage of the telephone terminal (T11 to T1i, T21, T31 to T3j); and a controller (22) which controls the usage of the telephone terminal (T11 to T1i, T21, T31 to T3j) in accordance with the second identification information by reading from the memory (21) the second identification information corresponding to the first identification information included in a usage request, when the usage request has occurred in the telephone terminal (T11 to T1i, T21, T31 to T3j).

## Description

The present invention relates to a network telephony system that performs voice communication between telephone terminals via, for example, a LAN (local area network) and regulates the use of individual telephone terminals. The invention further relates to a control method for use in the network telephony system.

In recent years, there have been proposed systems of the type in which network telephone terminals (IP (Internet Protocol) telephone terminals) each having a communication processing function and a media information processing function are connected to a LAN. In this case, the LAN is connected to an external communication network, such as a public network, via a main apparatus, and processes such as protocol conversion and data format conversion are performed at IP telephone terminals and a main apparatus whereby to enable communication between IP telephone terminals and between the IP telephone terminals and the external communication network.

In a system of this type, a user is allowed to use various functions set in an IP telephone terminal of his (or her) own by using another IP telephone terminal serving as a migration destination. In addition, the user is allowed to receive information services from an information service provider on the Internet simply by carrying out a log-in process with a user ID being input to the migration destination IP telephone terminal (refer to, for example, Jpn. Pat. Appln. KOKAI Publication No. 2001-352411 and Jpn. Pat. Appln. KOKAI Publication No. 2002-101091).

The system described above provides no regulations regarding locations where the user uses the IP telephone terminal. In addition, the system allows individual users to use various functions set in migration destination IP telephone terminals at same conditions. Further, the system allows the individual users to receive information services from information service providers on the Internet in same conditions in the migration destination IP telephone terminals.
As such, precise services corresponding to the individual users cannot be provided, and processes such as accounting processes regarding per-user telephone terminal usage cannot be elucidated.

Accordingly, the present invention is to provide a network telephony system capable of controlling telephone-terminal usage locations, usage services, and the like, for individual users, and a control method for use in the network telephony system.

According to an aspect of the present invention, there is provided a network telephony system comprising a plurality of telephone terminals, and a telephone exchange apparatus accommodating the plurality of telephone terminals via a communication network and causing the plurality of telephone terminals to be interconnected and to perform communication, comprising: a memory which stores first identification information necessary to use the telephone terminal and second identification information correlated with the first identification information to regulate usage of the telephone terminal; and a controller which controls the usage of the telephone terminal in accordance with the second identification information by reading from the memory the second identification information corresponding to the first identification information included in a usage request, when the usage request has occurred in the telephone terminal.

According to another aspect of the present invention, there is provided a control method for a network telephony system comprising a plurality of telephone terminals, and a telephone exchange apparatus accommodating the plurality of telephone terminals via a communication network and causing the plurality of telephone terminals to be interconnected and to perform communication, the control method comprising: storing into a memory first identification information necessary to use the telephone terminal and second identification information correlated with the first identification information to regulate usage of the telephone terminal; reading from the memory the second identification information corresponding to the first identification information included in a usage request, when the usage request has occurred in the telephone terminal, and controlling the usage of the telephone terminal in accordance with the second identification information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a configuration a network telephony system according to the present invention.
FIG. 2 is a block diagram of the functions showing the main apparatus shown in FIG. 1.
FIG. 3 is a view to explain memory contents of a storage section according to a first embodiment of the present invention;
FIG. 4 is a flowchart representing the processing operation of the processing section according to the first embodiment;
FIG. 5 is a view to explain memory contents of a storage section according to a second embodiment of the present invention;
FIG. 6 is a flowchart representing the processing operation of the processing section according to the second embodiment;
FIG. 7 is a view to explain memory contents of a storage section according to a third embodiment of the present invention;
FIG. 8 is a flowchart representing the processing operation of the processing section according to the third embodiment;
FIG. 9 is a view to explain memory contents of a storage section according to a fourth embodiment of the present invention;
FIG. 10 is a flowchart representing the processing operation of the processing section according to the fourth embodiment;
FIG. 11 is a view to explain memory contents of a storage section according to a fifth embodiment of the present invention;
FIG. 12 is a flowchart representing the processing operation of the processing section according to the fifth embodiment;
FIG. 13 is a view to explain memory contents of a storage section according to a sixth embodiment of the present invention;
FIG. 14 is a flowchart representing the processing operation of the processing section according to the sixth embodiment;
FIG. 15 is a view to explain memory contents of a storage section according to a seventh embodiment of the present invention;
FIG. 16 is a flowchart representing the processing operation of the processing section according to the seventh embodiment;
FIG. 17 is a view to explain memory contents of a storage section according to a eighth embodiment of the present invention;
FIG. 18 is a flowchart representing the processing operation of the processing section according to the eighth embodiment;
FIG. 19 is a view to explain memory contents of a storage section according to a ninth embodiment of the present invention;
FIG. 20 is a flowchart representing the processing operation of the processing section according to the ninth embodiment;
FIG. 21 is a view to explain memory contents of a storage section according to a tenth embodiment of the present invention; and
FIG. 22 is a flowchart representing the processing operation of the processing section according to the tenth embodiment.

Embodiments of the present invention will be described in detail below with reference to the drawings.

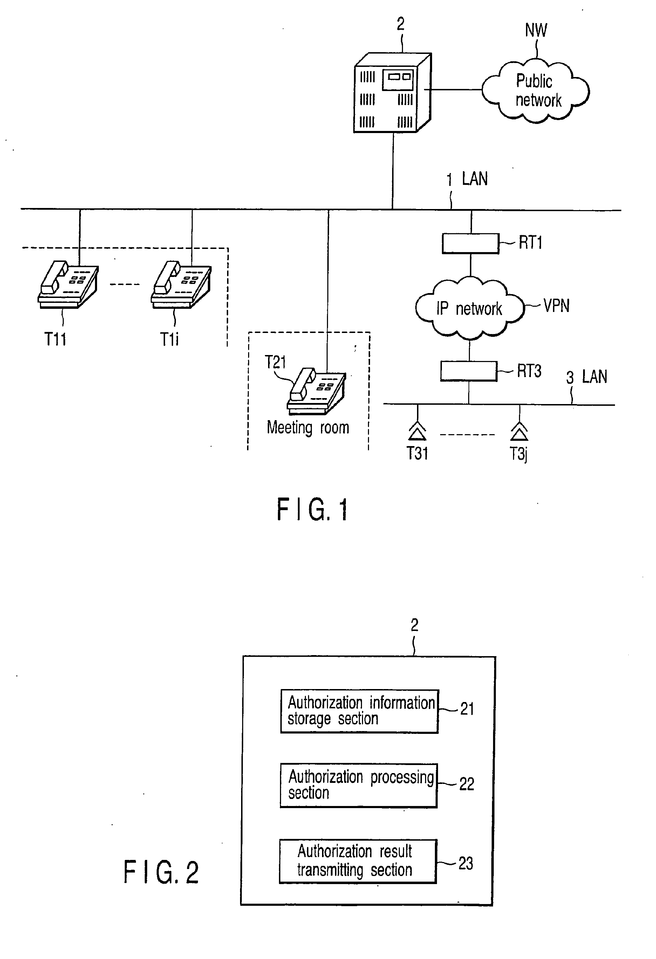

FIG. 1 is a schematic configuration view showing a network telephony system according to the present invention.

The system has local area networks (LANs) 1 and 3. A plurality of telephone terminals T11 to T1i (i = natural number) and T21 are connected to the LAN 1. The telephone terminals T11 to T1i and T21 are each an IP telephone terminal having a communication processing function and a media information processing function. Similarly, a plurality of telephone terminals T31 to T3j (j = natural number) are each an IP telephone terminal having a communication processing function and a media information processing function.

In addition, a main apparatus 2 and a router RT1 are connected to the LAN 1. The main apparatus 2 has a function of establishing interconnection between the plurality of individual telephone terminals T11 to T1i and T21 connected to LAN 1; between the plurality of telephone terminals T11 to T1i and T21 and a public network NW; and between the plurality of telephone terminals T11 to T1i and T21 and the router RT1. The main apparatus 2 has a function of establishing interconnection of the plurality of individual telephone terminals T31 to T3j connected to the LAN 3; between the plurality of telephone terminals T31 to T3j and the public network NW; and between the telephone terminals T11 to T1i and T21 and the telephone terminals T31 to T3j. Further, the main apparatus 2 has conversion functions for communication protocols and signal formats between the LAN 1 and the public network NW.

The router RT1 connects between the LAN 1 and an IP network VPN, and has conversion functions for communication protocols and signal formats between the LAN 1 and an IP network VPN. In addition, a router RT3 is connected to the IP network VPN. The router RT3 connects between the LAN 3 and the IP network VPN, and has conversion functions for communication protocols and signal formats between the LAN 3 and the IP network VN.

The main apparatus 2 has functions related to the present invention, as described below. FIG. 2 is a block diagram of the functions.

The main apparatus 2 has a authorization information storage section 21 (hereafter, "storage section 21"), a authorization processing section 22 (hereafter, "processing section 22"), and a authorization result transmitting section 23 (hereafter, "transmitting section 23"). The storage section 21 stores first identifiers necessary to use the telephone terminals T11 to T1i, T21, and T31 to T3j, and second identifiers to regulate the usage of the telephone terminals T11 to T1i, T21, and T31 to T3j in correspondence with the first identifiers.

Suppose that at, for example, the telephone terminal T21, when a usage request including a first identifier has occurred following a log-in entered by a user. In this case, the processing section 22 reads a second identifier corresponding to the first identifier included in the usage request from the storage section 21, and performs control regarding the usage of the telephone terminal T21 in accordance with the second identifier.

The transmitting section 23 transmits a determination result output from the processing section 22 to the requesting-source telephone terminal T21.

### (First Embodiment)

A first embodiment of the present invention is related to the storage section 21 and the processing section 22.

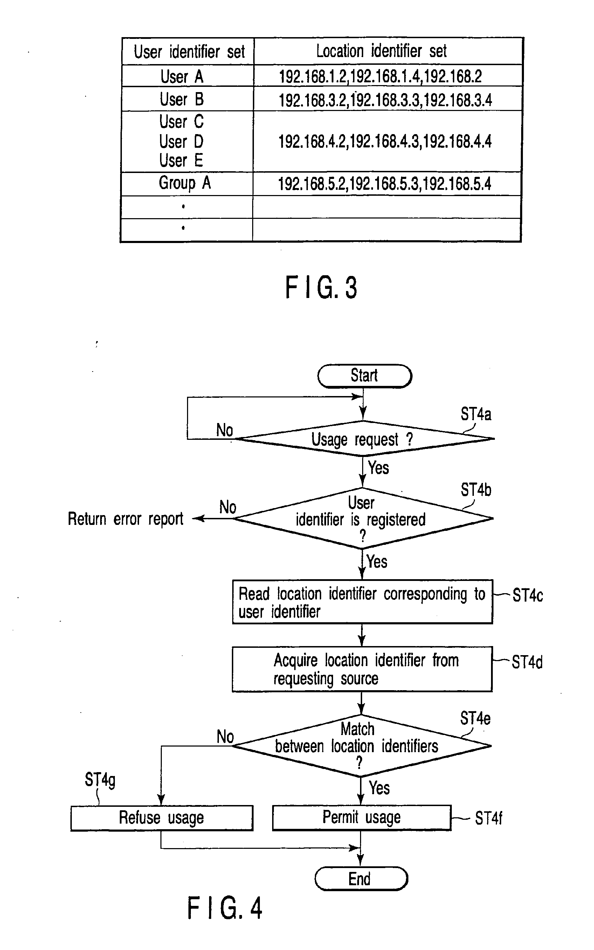

FIG. 3 shows an example case according to the first embodiment, where user identifiers and location identifiers are stored in the storage section 21 in correlation with each other. More specifically, the user identifier is an identifier preliminarily assigned to each user. The location identifier is an identifier, such as an IP address, representing a setup location of each of the telephone terminals T11 to T1i, T21, and T31 to T3j. "Group A" included "user names" represents a plurality of users in a company.

FIG. 4 is a flowchart representing the processing operation of the processing section 22 of the main apparatus 2.

By way of example, a case is now assumed in which a user has performed a log-in process by inputting "User A" on the telephone terminal T21 set for a meeting room. In response, a usage request including "User A" is transmitted to the main apparatus 2.

The processing section 22 is all time monitoring whether or not a usage request has arrived (step ST4a). If a usage request has arrived (Yes), the processing section 22 determines whether or not "User A" included in the usage request is registered in the storage section 21 (step ST4b). If not registered (No), the processing section 22 returns an error report to the requesting-source telephone terminal T21.

On the other hand, if "User A" is registered (Yes), the processing section 22 reads a location identifier set corresponding to "User A" from the storage section 21 (step ST4c), and acquires the location identifier "192.168.1.4" from the requesting-source telephone terminal T21 (step ST4d). Then, the processing section 22 performs a comparison between the location identifier stored in the storage section 21 and the location identifier acquired from the telephone terminal T21 whereby to determine whether or not the two identifiers match each other (step ST4e).

If having found a match between the location identifiers (Yes), the processing section 22 permits "User A" to use the telephone terminal T21 (step ST4f). If, on the other hand, not having found a match (No), the processing section 22 refuses the usage request of "User A" for the telephone terminal T21 (step ST4g).

At this event, the transmitting section 23 transmits the determination result to the requesting-source telephone terminal T21.

As described above, according to the first embodiment, "user names" and "IP addresses" are stored in correlation with each other into the storage section 21 of the main apparatus 2. Thereby, locational regulation can be precisely carried out in units of the user in such a manner that authorization for the usage of the telephone terminal T21 in a meeting room is granted to a user having a high security level, but on the other hand usage of the meeting-room telephone terminal T21 by an ordinary user is refused.

### (Second Embodiment)

A second embodiment of the present invention is related to the storage section 21 and the processing section 22.

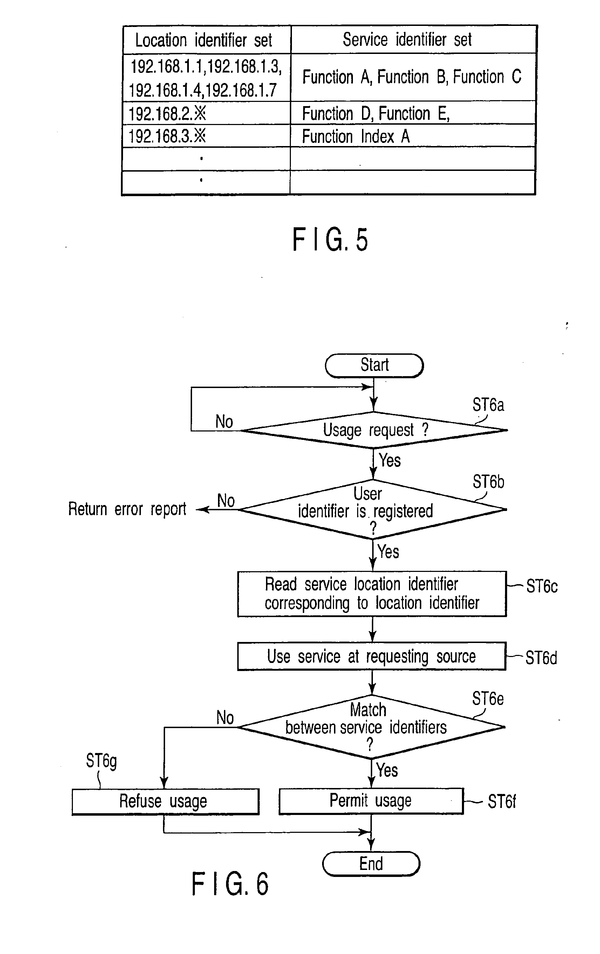

FIG. 5 shows an example case according to the second embodiment, where location identifiers and service identifiers are stored in the storage section 21 in correlation with each other. The service identifiers are identifiers representing services usable at the telephone terminals T11 to T1i, T21, and T31 to T3j. "Function Index A" included the service identifiers represents abridged service identifiers including "Function A to Function M".

FIG. 6 is a flowchart representing the processing operation of the processing section 22 of the main apparatus 2.

By way of example, a case is now assumed in which a user has carried out a log-in process on the telephone terminal T21 set for a meeting room. In response, a usage request including the IP address "192.168.1.4" is transmitted to the main apparatus 2.

The processing section 22 is all time monitoring whether or not a usage request has arrived (step ST6a). If a usage request has arrived (Yes), the processing section 22 determines whether or not "192.168.1.4" included in the usage request is registered in the storage section 21 (step ST6b). If not registered (No), the processing section 22 returns an error report to the requesting-source telephone terminal T21.

On the other hand, if "192.168.1.4" is registered (Yes), the processing section 22 reads a service identifier set corresponding to "192.168.1.4" from the storage section 21 (step ST6c). In the event that the service is requested for being used at the requesting-source telephone terminal T21 (step ST6d), the processing section 22 performs a comparison between the service identifier to be used and the service identifier stored in the storage section 21 whereby to determine whether or not the two identifiers match each other (step ST6e).

If having found a match between the service identifiers (Yes), the processing section 22 permits the user to use, for example, "Function A" (step ST6f). However, for a mismatch service, such as "Function E" (No), the processing section 22 refuses the usage request of the user for "Function E" (step ST6g).

At this event, the transmitting section 23 transmits the determination result to the requesting-source telephone terminal T21.

As described above, according to the second embodiment, the location identifiers and the service identifiers are stored in correlation with each other into the storage section 21 of the main apparatus 2. Thereby, service usage regulation can be carried out precisely in units of the location in such a manner that while the service such as "Function A" is permitted to be used in a specific location, the service such as "Function E" is permitted to be used in a different location.

### (Third Embodiment)

A third embodiment of the present invention is related to the storage section 21 and the processing section 22.

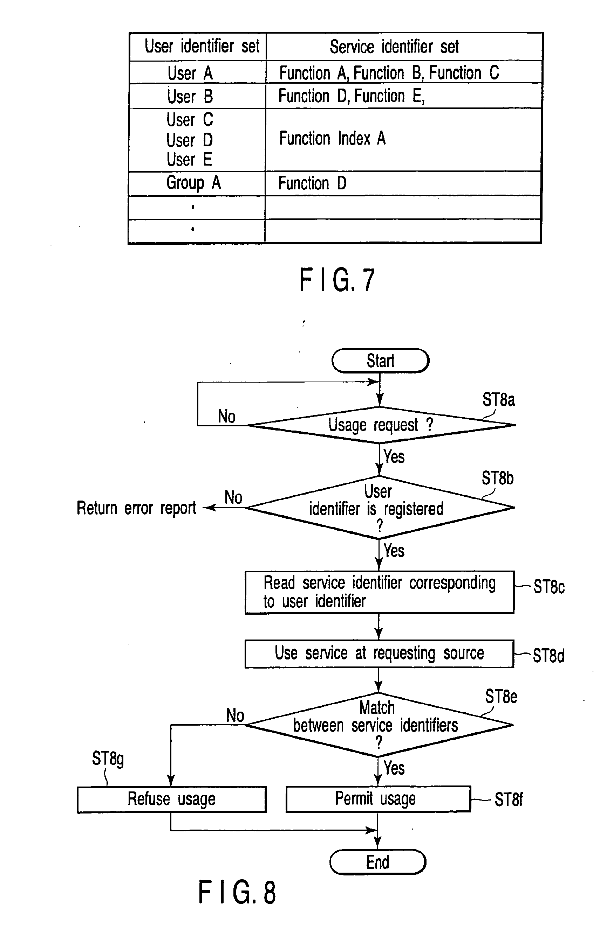

FIG. 7 shows an example case according to the third embodiment, where user identifiers and service identifiers are stored in the storage section 21 in correlation with each other.

FIG. 8 is a flowchart representing the processing operation of the processing section 22 of the main apparatus 2.

By way of example, a case is now assumed in which a user has carried out a log-in process by entering "User A" on the telephone terminal T21 set for a meeting room. In response, a usage request including "User A" is transmitted to the main apparatus 2.

The processing section 22 is all time monitoring whether or not a usage request has arrived (step ST8a). If a usage request has arrived (Yes), the processing section 22 determines whether or not "User A" included in the usage request is registered in the storage section 21 (step ST8b). If not registered (No), the processing section 22 returns an error report to the requesting-source telephone terminal T21.

On the other hand, if "User A" is registered (Yes), the processing section 22 reads a service identifier set corresponding to "User A" from the storage section 21 (step ST8c). In the event that the service is requested for being used at the requesting-source telephone terminal T21 (step ST8d), the processing section 22 performs a comparison between the service identifier to be used and the service identifier stored in the storage section 21 whereby to determine whether or not the two identifiers match each other (step ST8e).

If having found a match between the service identifiers (Yes), the processing section 22 permits the user to use, for example, "Function A" (step ST8f). However, for a mismatch service, such as "Function E" (No), the processing section 22 refuses a usage request of the user for "Function E" (step ST8g).

At this event, the transmitting section 23 transmits the determination result to the requesting-source telephone terminal T21.

As described above, according to the third embodiment, the user identifiers and the service identifiers are stored in correlation with each other into the storage section 21 of the main apparatus 2. Thereby, service usage regulation can be carried out precisely in units of the user in such a manner that while the service such as "Function A" is permitted to be used by a specific user, the service such as "Function E" is permitted to be used by a different user.

In addition, in a case where, for example, users, sections, or groups having different security levels share one system, services to be used in units of each of the users or sections can be regulated, whereby processes such as an accounting processing in units of the user or section can be elucidated.

### (Fourth Embodiment)

A fourth embodiment of the present invention is related to the storage section 21 and the processing section 22.

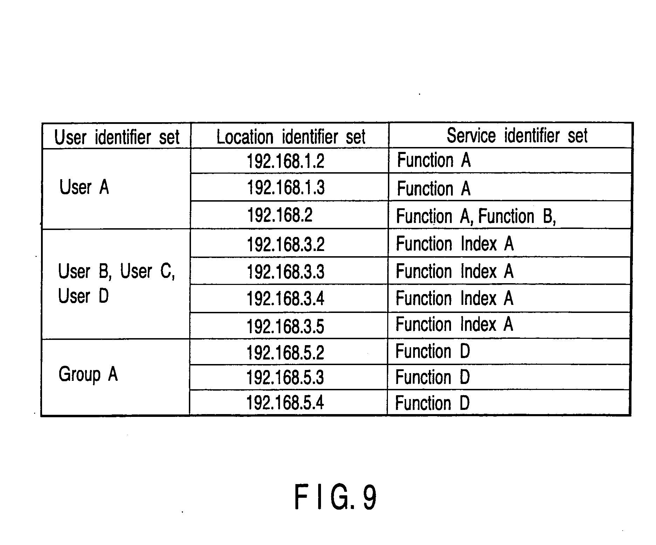

FIG. 9 shows an example case according to the fourth embodiment where user identifiers, location identifiers, and service identifiers are stored in the storage section 21 in correlation with one another.

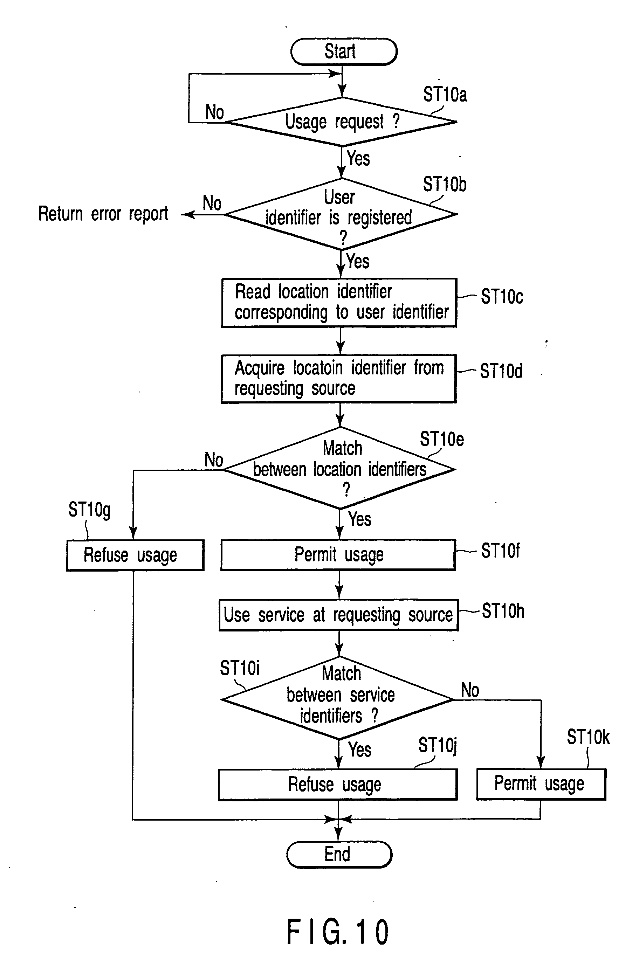

FIG. 10 is a flowchart representing the processing operation of the processing section 22 of the main apparatus 2.

By way of example, a case is now assumed in which a user has carried out a log-in process by entering "User A" on the telephone terminal T21 set for a meeting room. In response, a usage request including "User A" is transmitted to the main apparatus 2.

The processing section 22 is all time monitoring whether or not a usage request has arrived (step ST10a). If a usage request has arrived (Yes), the processing section 22 determines whether or not "User A" included in the usage request is registered in the storage section 21 (step ST10b). If not registered (No), the processing section 22 returns an error report to the requesting-source telephone terminal T21.

On the other hand, if "User A" is registered (Yes), the processing section 22 reads a location identifier set corresponding to "User A" from the storage section 21 (step ST10c), and thereby acquires the location identifier "192.168.1.3" from the requesting-source telephone terminal T21 (step ST10d). Then, the processing section 22 performs a comparison between the location identifier stored in the storage section 21 and the location identifier acquired from the telephone terminal T21 whereby to determine whether or not the two identifiers match each other (step ST10e).

If having found a match between the location identifiers (Yes), the processing section 22 permits "User A" to use the telephone terminal T21 (step ST10f). However, in the event of a mismatch case (No), the processing section 22 refuses the usage request of "User A" for the telephone terminal T21 (step ST10g).

In the event that the above-described usage has been permitted and the requesting-source telephone terminal T21 uses a service (step ST10h), the processing section 22 performs a comparison between an identifier of the service to be used and a service identifier stored in the storage section 21 whereby to determine whether or not the two identifiers match each other (step ST10i).

If having found a match between the service identifiers (Yes), the processing section 22 permits the user to use, for example, "Function A" (step ST10j). However, for a mismatch service, such as "Function E" (No), the processing section 22 refuses a usage request of the user for "Function E" (step ST10k).

At this event, the transmitting section 23 transmits the determination result to the requesting-source telephone terminal T21.

As described above, according to the fourth embodiment, the user identifiers, the location identifiers and the service identifiers are stored in correlation with one another into the storage section 21 of the main apparatus 2. Thereby, locational regulation can be carried out precisely in units of the user in such a manner that usage of the meeting-room telephone terminal T21 is permitted, but on the other hand the usage of the meeting-room telephone terminal T21 by an ordinary user is refused. In addition, services usable at telephone terminals T21 can be regulated in units of the user, whereby processes such as an accounting processing in units of the user can be elucidated.

### (Fifth Embodiment)

A fifth embodiment of the present invention is related to the storage section 21 and the processing section 22.

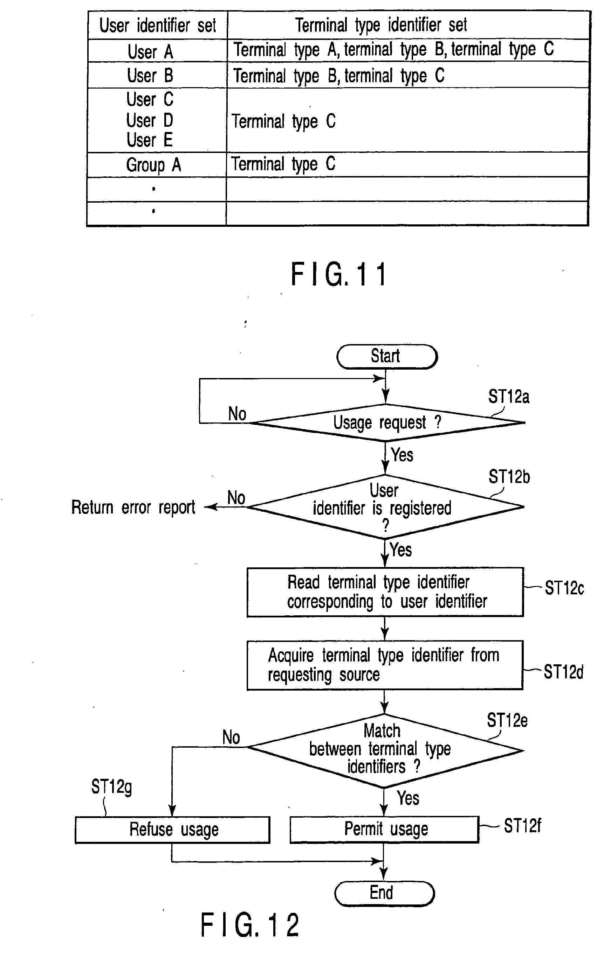

FIG. 11 shows an example case according to the fifth embodiment where user identifiers and terminal type identifiers are stored in the storage section 21 in correlation with each other. The individual terminal type identifiers are identifiers representing types of the telephone terminals T11 to T1i, T21, and T31 to T3j.

FIG. 12 is a flowchart representing the processing operation of the processing section 22 of the main apparatus 2.

By way of example, a case is now assumed in which a user has carried out a log-in process by entering "User A" on the telephone terminal T21 set for a meeting room. In response, a usage request including "User A" is transmitted to the main apparatus 2.

The processing section 22 is all time monitoring whether or not a usage request has arrived (step ST12a). If a usage request has arrived (Yes), the processing section 22 determines whether or not "User A" included in the usage request is registered in the storage section 21 (step ST12b). If not registered (No), the processing section 22 returns an error report to the requesting-source telephone terminal T21.

On the other hand, if "User A" is registered (Yes), the processing section 22 reads a terminal type identifier set corresponding to "User A" from the storage section 21 (step ST12c), and thereby acquires the terminal type identifier "terminal type A" from the requesting-source storage section 21 (step ST12d). Then, the processing section 22 performs a comparison between the terminal type identifier stored in the storage section 21 and the terminal type identifier acquired from the telephone terminal T21 whereby to determine whether or not the two identifiers match each other (step ST12e).

If having found a match between the terminal type identifiers (Yes), the processing section 22 permits "User A" to use the telephone terminal T21 (step ST12f). However, in the event of a mismatch case (No), the processing section 22 refuses the usage request of "User A" for the telephone terminal T21 (step ST12g).

At this event, the transmitting section 23 transmits the determination result to the requesting-source telephone terminal T21.

As described above, according to the fifth embodiment, the user identifiers and the terminal type identifiers are stored in correlation with each other into the storage section 21 of the main apparatus 2. Thereby, the telephone terminals T11 to T1i, T21, and T31 to T3j usable in units of the user can each be designated in such a manner that usage of the meeting-room telephone terminal T21 by a user having a high security level is permitted, but on the other hand the usage of the meeting-room telephone terminal T21 by an ordinary user is refused.

### (Sixth embodiment)

A sixth embodiment of the present invention is related to the storage section 21 and the processing section 22.

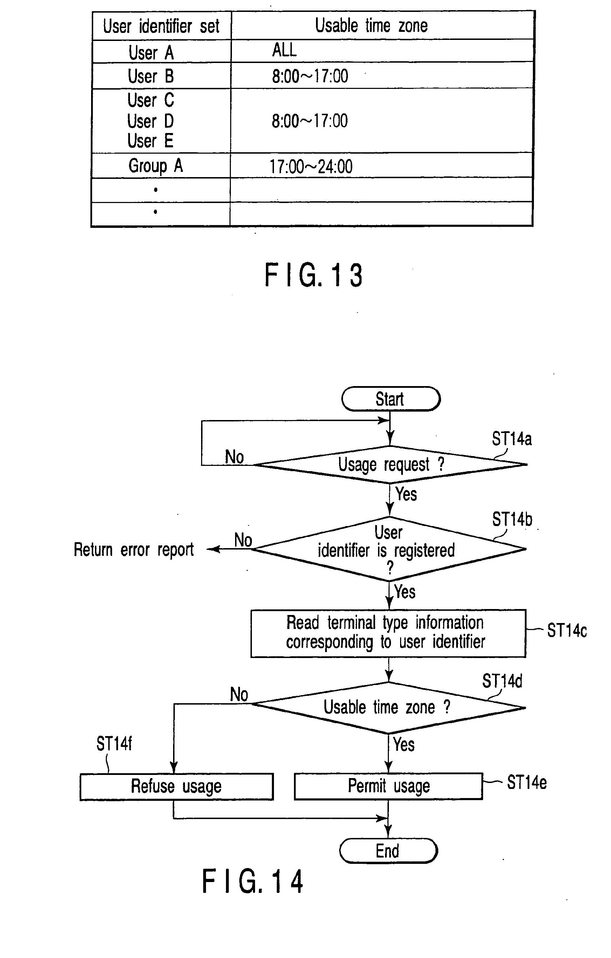

FIG. 13 shows an example case according to the sixth embodiment where user identifiers and time information are stored in the storage section 21 in correlation with each other. The individual time information are information representing usable time zones of the telephone terminals T11 to T1i, T21, and T31 to T3j.

FIG. 14 is a flowchart representing the processing operation of the processing section 22 of the main apparatus 2.

By way of example, a case is now assumed in which a user has carried out a log-in process by entering "User A" on the telephone terminal T21 set for a meeting room. In response, a usage request including "User A" is transmitted to the main apparatus 2.

The processing section 22 is all time monitoring whether or not a usage request has arrived (step ST14a). If a usage request has arrived (Yes), the processing section 22 determines whether "User A" included in the usage request is registered in the storage section 21 (step ST14b). If not registered (No), the processing section 22 returns an error report to the requesting-source telephone terminal T21.

On the other hand, if "User A" is registered (Yes), the processing section 22 reads time information corresponding to "User A" from the storage section 21 (step ST14c). Then, the processing section 22 performs a determination whether or not the time is a usable time zone (step ST14d).

If the time is a usable time zone (Yes), the processing section 22 permits "User A" to use the telephone terminal T21 (step ST14e). However, if the time is other than a usable time zone (No), the processing section 22 refuses the usage request of "User A" for the telephone terminal T21 (step ST14f).

At this event, the transmitting section 23 transmits the determination result to the requesting-source telephone terminal T21.

As described above, according to the sixth embodiment, the user identifiers and the time information are stored in correlation with each other into the storage section 21 of the main apparatus 2. Thereby, time regulation can be carried out precisely in units of the user in such a manner while a user having a high security is permitted to use the meeting-room telephone terminal T21 for 24 hours, an ordinary user is permitted to use the meeting-room telephone terminal T21 in office hours.

Thereby, in a case where, for example, users, sections, or groups having different security levels share one system, services to be used in units of each of the users or sections can be regulated, whereby processes such as an accounting processing in units of the user or section can be elucidated.

### (Seventh embodiment)

A seventh embodiment of the present invention is related to the storage section 21 and the processing section 22.

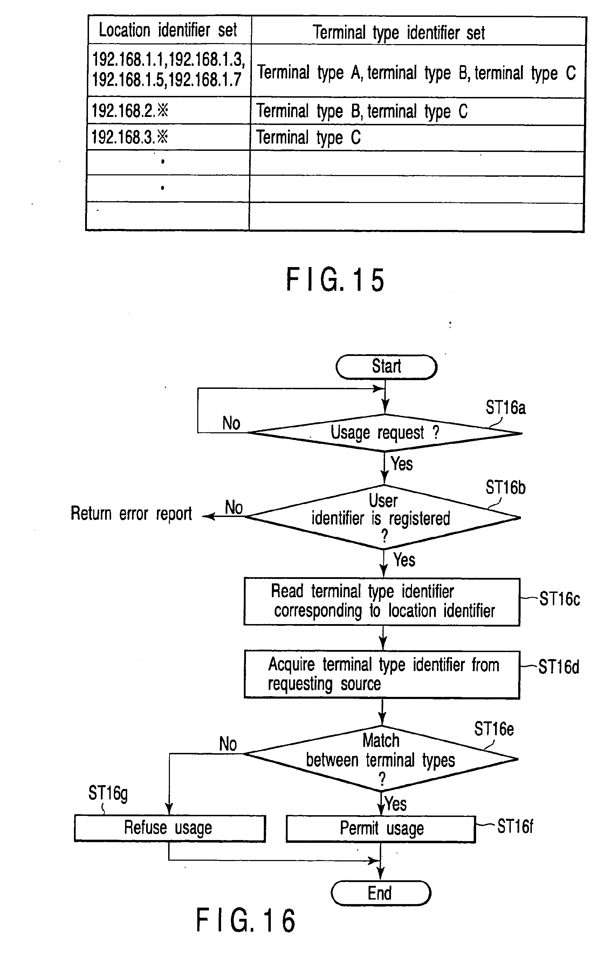

FIG. 15 shows an example case according to the seventh embodiment where location identifiers and terminal type identifiers are stored in the storage section 21 in correlation with each other.

FIG. 16 is a flowchart representing the processing operation of the processing section 22 of the main apparatus 2.

By way of example, a case is now assumed in which a user has carried out a log-in process by entering "192.168.1.1" on the telephone terminal T21 set for a meeting room. In response, a usage request including "192.168.1.1" is transmitted to the main apparatus 2.

The processing section 22 is all time monitoring whether or not a usage request has arrived (step ST16a). If a usage request has arrived (Yes), the processing section 22 determines whether or not "192.168.1.1" included in the usage request is registered in the storage section 21 (step ST16b). If not registered (No), the processing section 22 returns an error report to the requesting-source telephone terminal T21.

On the other hand, if "192.168.1.1" is registered (Yes), the processing section 22 reads a terminal type identifier set corresponding to "192.168.1.1" from the storage section 21 (step ST16c), and thereby acquires a terminal type identifier from the requesting-source telephone terminal T21 (step ST16d). Then, the processing section 22 performs a comparison between the terminal type identifier acquired from the telephone terminal T21 and the terminal type identifier stored in the storage section 21 whereby to determine whether or not the two identifiers match each other (step ST16e).

If having found a match between the terminal type identifiers (Yes), the processing section 22 permits the user to use the telephone terminal T21 (step ST16f). However, in the event of a mismatch case (No), the processing section 22 refuses the usage request of the user for the telephone terminal T21 (step ST16g).

At this event, the transmitting section 23 transmits the determination result to the requesting-source telephone terminal T21.

As described above, according to the seventh embodiment, the location identifiers and the terminal type identifiers are stored in correlation with each other into the storage section 21 of the main apparatus 2. Thereby, the types of the telephone terminals T11 to T1i, and T21 usable in units of the location can each be precisely designated in such a manner that while "terminal type A" is permitted to be used in a specific location, and "terminal type E" is permitted to be used in a different location. Thereby, illegal terminal exchange or the like can be prevented.

### (Eighth embodiment)

An eighth embodiment of the present invention is related to the storage section 21 and the processing section 22.

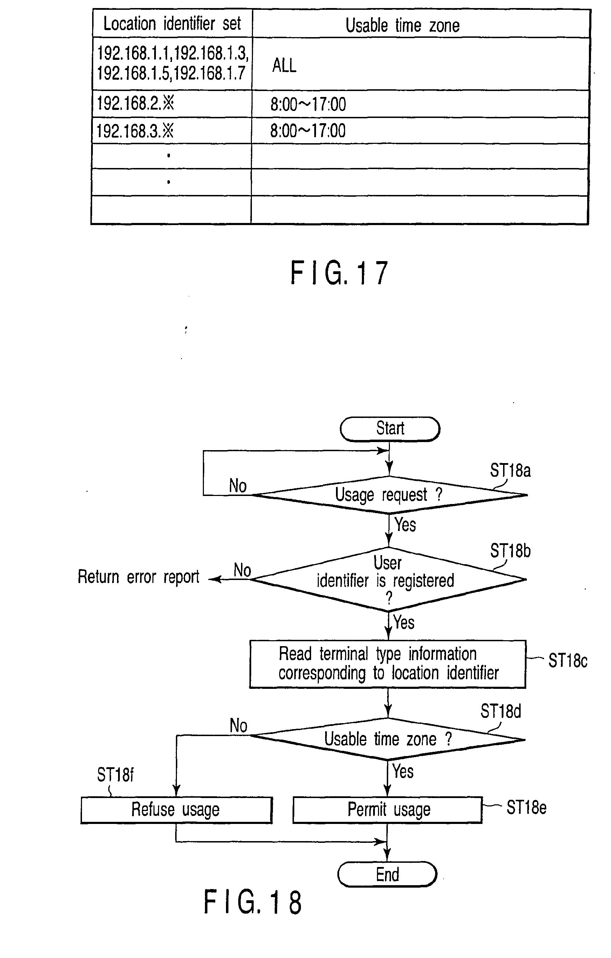

FIG. 17 shows an example case according to the eighth embodiment where location identifiers and time information are stored in the storage section 21 in correlation with each other.

FIG. 18 is a flowchart representing the processing operation of the processing section 22 of the main apparatus 2.

By way of example, a case is now assumed in which a user has carried out a log-in process by entering "192.168.1.1" on the telephone terminal T21 set for a meeting room. In response, a usage request including "192.168.1.1" is transmitted to the main apparatus 2.

The processing section 22 is all time monitoring whether or not a usage request has arrived (step ST18a). If a usage request has arrived (Yes), the processing section 22 determines whether or not "192.168.1.1" included in the usage request is registered in the storage section 21 (step ST18b). If not registered (No), the processing section 22 returns an error report to the requesting-source telephone terminal T21.

On the other hand, if "192.168.1.1" is registered (Yes), the processing section 22 reads time information corresponding to "192.168.1.1" from the storage section 21 (step ST18c). Then, the processing section 22 performs a determination whether or not the time is a usable time zone (step ST18d).

If the time is a usable time zone (Yes), the processing section 22 permits usage of the telephone terminal T21 (step ST18e). However, if the time is other than a usable time zone (No), the processing section 22 refuses the request for usage of the telephone terminal T21 (step ST18f).

At this event, the transmitting section 23 transmits the determination result to the requesting-source telephone terminal T21.

As described above, according to the eighth embodiment, the location identifiers and the time information are stored in correlation with each other into the storage section 21 of the main apparatus 2. Thereby, time regulation can be carried out precisely in units of the location in such a manner that while the telephone terminal 11 in a specific location is permitted to be used for 24 hours, the telephone terminal T21 set for a different location such as a meeting-room is permitted to be used in office hours.

### (Ninth Embodiment)

A ninth embodiment of the present invention is related to the storage section 21 and the processing section 22.

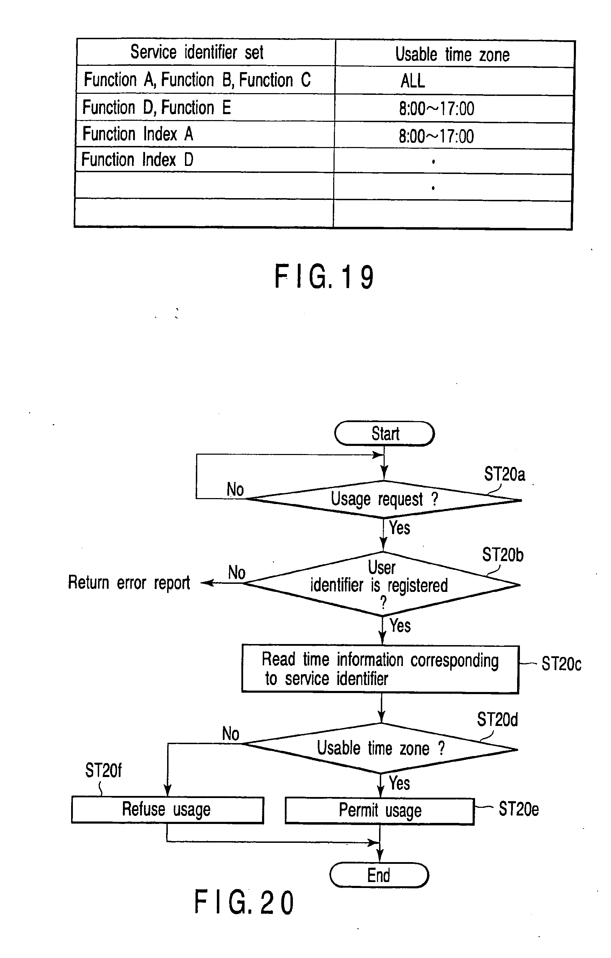

FIG. 19 shows an example case according to the ninth embodiment where service identifiers and time information are stored in the storage section 21 in correlation with each other.

FIG. 20 is a flowchart representing the processing operation of the processing section 22 of the main apparatus 2.

By way of example, a case is now assumed in which a user has carried out key operations on the telephone terminal T11 to use "Function A". In response, a usage request including "Function A" is transmitted to the main apparatus 2.

The processing section 22 is all time monitoring whether a usage request has arrived (step ST20a). If a usage request has arrived (Yes), the processing section 22 determines whether or not "Function A" included in the usage request is registered in the storage section 21 (step ST20b). If not registered (No), the processing section 22 returns an error report to the requesting-source telephone terminal T21.

On the other hand, if "Function A" is registered (Yes), the processing section 22 reads time information corresponding to "Function A" from the storage section 21 (step ST20c). Then, the processing section 22 performs a determination whether the time is a usable time zone (step ST20d).

If the time is a usable time zone (Yes), the processing section 22 permits usage of "Function A" (step ST20e). However, for "Function E," if the time is other than a usable time zone (No), the processing section 22 refuses usage of "Function E" (step ST20f).

At this event, the transmitting section 23 transmits the determination result to the requesting-source telephone terminal T21.

As described above, according to the ninth embodiment, the service identifiers and the time information are stored in correlation with each other into the storage section 21 of the main apparatus 2. Thereby, time regulation can be carried out precisely in units of the service in such a manner that while a high-fee service is permitted to be used in office hours, a low-fee service is permitted to be used for 24 hours.

### (Tenth Embodiment)

A tenth embodiment of the present invention is related to the storage section 21 and the processing section 22.

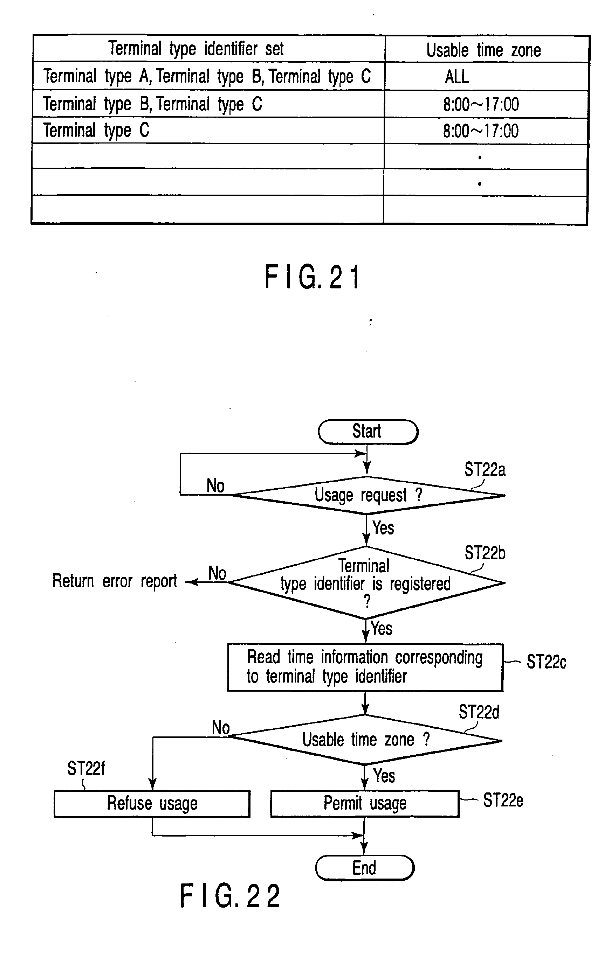

FIG. 21 shows an example case according to the tenth embodiment where terminal type identifiers and time information are stored in the storage section 21 in correlation with each other.

FIG. 22 is a flowchart representing the processing operation of the processing section 22 of the main apparatus 2.

By way of example, a case is now assumed in which a user has performed an off-hook operation on the telephone terminal T11. In response, a usage request including "Terminal Type A" is transmitted to the main apparatus 2.

The processing section 22 is all time monitoring whether or not a usage request has arrived (step ST22a). If a usage request has arrived (Yes), the processing section 22 determines whether "Terminal Type A" included in the usage request is registered in the storage section 21 (step ST22b). If not registered (No), the processing section 22 returns an error report to the requesting-source telephone terminal T21.

On the other hand, if "Terminal Type A" is registered (Yes), the processing section 22 reads time information corresponding to "Terminal Type A" from the storage section 21 (step ST22c). Then, the processing section 22 performs a determination whether or not the time is a usable time zone (step ST22d).

If the time is a usable time zone (Yes), the processing section 22 permits usage of "Terminal Type A" (step ST22e). However, for "Terminal Type C," if the time is other than a usable time zone (No), the processing section 22 refuses usage of "Terminal Type C" (step ST22f).

At this event, the transmitting section 23 transmits the determination result to the requesting-source telephone terminal T21.

As described above, according to the tenth embodiment, the terminal type identifiers and the time information are stored in correlation with each other into the storage section 21 of the main apparatus 2. Thereby, time regulation can be carried out precisely in units of the type of each of the T11 to T1i and T21 in such a manner that while the telephone terminal T12 of a high-fee type is permitted to be used in office hours, the telephone terminal T11 of a low-fee type is permitted to be used for 24 hours.

### (Other Embodiments)

The present invention is not limited to the individual embodiments described above. For example, in the first embodiment, while the user identifier is set as being the "user name," it may be anything specific to a user, such as a pass-code or telephone number. In addition, while the location identifier is set as being the "IP address," it may be anything with which the location can be designated.

The first embodiment has been described with reference to the example where the location identifier is read based on the user identifier as a key. However, the present invention is not limited thereto, but the user identifier may be read based on the location identifier as a key. Similarly, the second to tenth embodiments may each be enforced in the manner that, for example, the location identifier or the user identifier be read based on the service identifier as a key, the location identifier or the user identifier be read based on the terminal type identifier as a key, or the location identifier or the user identifier be read based on the time information as a key.

The fourth embodiment has been described with reference to the example where the location identifier and service identifier are associated with each other in correlation with the user identifier. Alternatively, two or more of the time information, the location identifier, the service identifier, and the terminal type identifier may be associated with one another. Still alternatively, identifiers other than the time information, the location identifier, the service identifier, and the terminal type identifier may be used.

The embodiments have each been shown and described with reference to the example where the storage section, the processing section, and the transmitting section are provided in the main apparatus. However, these sections may be provided in each of the telephone terminals or in a specific telephone terminal, thereby enabling the processing burden of the main apparatus to be reduced. Alternatively, the storage section, the processing section, and the transmitting section may be provided in, for example, a server connected to the LAN.

The embodiments have each been shown and described with reference to the example where the telephone terminals are connected to the LANs, they may be, for example, personal computers each having telephony functionality.

Further, the embodiments may each be enforced by modifying the system configuration and type, the main apparatus configuration, the identifier types, the telephone terminal types, the telephone-terminal usage regulation procedure, and the like to various types without departing from the spirit or scope the invention.

## Claims

1. A network telephony system comprising a plurality of telephone terminals (T11 to T1i, T21, T31 to T3j), and a telephone exchange apparatus (2) accommodating the plurality of telephone terminals (T11 to T1i, T21, T31 to T3j) via a communication network (1, VPN, 3) and causing the plurality of telephone terminals (T11 to T1i,T21,T31 to T3j) to be interconnected and to perform communication, **characterized by** comprising:
means (21) for storing first identification information necessary to use the telephone terminal (T11 to T1i, T21, T31 to T3j) and second identification information correlated with the first identification information to regulate usage of the telephone terminal (T11 to T1i, T21, T31 to T3j); and
means (22) for controlling the usage of the telephone terminal in accordance with the second identification information by reading from the memory the second identification information corresponding to the first identification information included in a usage request, when the usage request has occurred in the telephone terminal (T11 to T1i, T21, T31 to T3j).

2. A network telephony system according to claim 1, **characterized in that** the means (21) for storing and the means (22) for controlling are provided in the telephone exchange apparatus (2).

3. A network telephony system according to claim 1, **characterized in that** the means (21) for storing and the means (22) for controlling are provided in at least one of the plurality of telephone terminals (T11 to T1i, T21, T31 to T3j).

4. A network telephony system according to claim 1, **characterized in that**
the first identification information includes at least one of user identification information for identifying a user, location identification information representing a setup location of the telephone terminal to be used, service identification information representing a service usable in the telephone terminal, and terminal type identification information representing the type of the telephone terminal to be used, and
the second identification information includes at least one of time information representing time when a service is usable in the telephone terminal (T11 to T1i, T21, T31 to T3j), the location identification information, the service identification information, and the terminal type identification information.

5. A network telephony system according to claim 1, **characterized in that**
the first identification information includes at least one of the user identification information, the location identification information, the service identification information, and the terminal type identification information, and
the second identification information includes a combination of two or more of the time information, the location identification information, the service identification information, and the terminal type identification information.

6. A control method for a network telephony system comprising a plurality of telephone terminals (T11 to T1i, T21, T31 to T3j), and a telephone exchange apparatus (2) accommodating the plurality of telephone terminals (T11 to T1i, T21, T31 to T3j) via a communication network (1, VPN, 3) and causing the plurality of telephone terminals (T11 to T1i, T21, T31 to T3j) to be interconnected and to perform communication, the control method **characterized by** comprising:
storing into a memory (21) first identification information necessary to use the telephone terminal and second identification information correlated with the first identification information to regulate usage of the telephone terminal;
reading from the memory (21) the second identification information corresponding to the first identification information included in a usage request, when the usage request has occurred in the telephone terminal (T11 to T1i, T21, T31 to T3j), and
controlling the usage of the telephone terminal (T11 to T1i, T21, T31 to T3j) in accordance with the second identification information.

7. A method according to claim 6, **characterized in that**
the first identification information includes at least one of user identification information for identifying a user, location identification information representing a setup location of the telephone terminal (T11 to T1i, T21, T31 to T3j) to be used, service identification information representing a service usable in the telephone terminal (T11 to T1i, T21, T31 to T3j), and terminal type identification information representing the type of the telephone terminal (T11 to T1i, T21, T31 to T3j) to be used, and
the second identification information includes at least one of time information representing time when a service is usable in the telephone terminal (T11 to T1i, T21, T31 to T3j), the location identification information, the service identification information, and the terminal type identification information.

8. A method according to claim 6, **characterized in that**
the first identification information includes at least one of the user identification information, the location identification information, the service identification information, and the terminal type identification information, and
the second identification information includes a combination of two or more of the time information, the location identification information, the service identification information, and the terminal type identification information.
